Europäisches Patentamt

European Patent Office

Office européen des brevets

(11) Veröffentlichungsnummer: **0 277 343 B1**

# EUROPÄISCHE PATENTSCHRIFT

(45) Veröffentlichungstag der Patentschrift: 03.04.91

(51) Int. Cl.⁵: **A01D 34/76**, A01B 59/04

(21) Anmeldenummer: 87118988.2

(22) Anmeldetag: 21.12.87

(54) Mähmaschine.

(30) Priorität: 26.01.87 DE 3702221

(43) Veröffentlichungstag der Anmeldung:
10.08.88 Patentblatt 88/32

(45) Bekanntmachung des Hinweises auf die
Patenterteilung:
03.04.91 Patentblatt 91/14

(84) Benannte Vertragsstaaten:
AT CH DE FR GB LI NL

(56) Entgegenhaltungen:
CH-A- 249 564          DE-A- 3 527 903
FR-A- 2 386 247        FR-A- 2 562 758
GB-A- 679 663          US-A- 2 429 492

(73) Patentinhaber: GREENLAND GMBH & CO. KG
Erwin-Dietrich-Platz 1
W-7702 Gottmadingen(DE)

(72) Erfinder: von Allwörden, Wilhelm
Alpenstrasse 18
W-7704 Gailingen(DE)

(74) Vertreter: Patentanwälte Grünecker, Kinkeldey, Stockmair & Partner
Maximilianstrasse 58
W-8000 München 22(DE)

**Beschreibung**

Die Erfindung betrifft eine Mähmaschine für den seitlich versetzten Anbau an einen Schlepper, die einen Fahrgestellrahmen und einen Querträger aufweist, der mehrere Mähwerkzeuge mit im wesentlichen senkrechte Rotationsachsen aufweist, deren Unterseite mit Schneidmessern versehen sind, wobei die Mähmaschine über eine verschwenkbare Deichsel mit einem Schlepper verbindbar ist und der Antrieb der Mähwerkzeuge über eine Antriebsgelenkwelle erfolgt, die mit der Zapfwelle des Schleppers verbunden ist und mit einem Schwenkgetriebe verbunden ist.

Die Arbeitsbreiten von gezogenen Mähmaschinen haben in den letzten Jahren erheblich zugenommen. Dies führte notwendigerweise zu schweren Mähmaschinen, deren Gewicht durch eine angebaute Konditioniereinrichtung zusätzlich erhöht wird.

Ferner ist bei gezogenen Mähmaschine diese am Fahrgestellrahmen höhenbeweglich anzulenken, um eine gute Bodenanpassung zu gewährleisten. Der Antrieb für diese Mähmaschine gestaltet sich damit sehr aufwendig.

Bei einer bekannten gezogenen Mähmaschine ist deren Deichsel derart mit dem ziehenden Schlepper verbunden, daß die Mähmaschine seitlich in eine Richtung aus der Transportstellung in die Arbeitsstellung verschwenkt werden kann. Dazu ist eine Antriebs-Gelenkwelle vorgesehen, die unterhalb der Deichsel liegt und eine Antriebsverbindung von einem schlepperseitigen Getriebe zu einem mähmaschinenseitigen Getriebe herstellt. Bei dieser Antriebsverbindung ist auf der Seite der Mähmaschine eine Kreuzgelenkverbindung für die Antriebswelle vorgesehen, die in Draufsicht unterhalb der Schwenkachse der Deichsel liegt. Diese Konstruktion hat noch den Nachteil, daß der Schwenkweg der Deichsel eng begrenzt ist, da ein maximaler Beugungswinkel für die Antriebs-Gelenkwelle nicht überschritten werden darf. Demzufolge sind diese Mähmaschine auch nur auf einer Seite des sie ziehenden Schleppers einsetzbar und können nur so weit nach innen eingeschwenkt werden, bis die Transportstellung erreicht ist.

Aus der US-PS 2 520 107 ist eine Mähmaschine bekannt, bei der anstelle einer Kreuzgelenkverbindung und einer längenveränderlichen Antriebswelle eine Mehrkant-Antriebswelle Verwendung findet, die einen schwenkbaren Kopf eines Eingangs-Winkelgetriebes durchsetzt. Die Ausgangswelle dieses Winkelgetriebes steht mit einer weiteren Zwischenwelle in Antriebsverbindung. Das Getriebe ist mit der Deichsel der als Fingerbalkenmähwerk ausgestalteten Mähmaschine fest verbunden.

Bei dieser bekannten Mähmaschine ist eine Höhenbeweglichkeit im wesentlichen auf den Fingerbalken beschränkt. Selbst wenn man anstelle eines Fingerbalkenmähwerks ein Kreisel- bzw. Scheibenmähwerk einsetzt, ergibt sich eine Anordnung, bei der die Mähmaschine als ganzes nur zusammen mit der Deichsel und der Antriebsverbindung zum Schlepper zum Ausgleich von Bodenunebenheiten verschwenkbar wäre. Hierbei spielt es keine Rolle, ob das schwenkbare Eingangsgetriebe beispielsweise auf der Seite der Mähmaschine vorgesehen ist.

Der vorliegenden Erfindung liegt die Aufgabe zugrunde, eine gezogene Mähmaschine zu schaffen, die beidseitig von der Schlepperspur einsetzbar ist, d.h. die in zwei verschiedene Arbeitsstellungen rechts und links von der zentral hinter dem Schlepper vorgesehenen Transportstellung verschwenkbar ist, wobei sich die Mähmaschine besonders gut auch unebenen Bodenoberflächen anpaßt.

Ausgehend von einer Mähmaschine der eingangs näher genannten Art wird zur Lösung dieser Aufgabe vorgeschlagen, daß das Schwenkgetriebe im wesentlichen mittig am Querträger angeordnet ist und daß die Antriebsgelenkwelle über ein Gabelstützgelenk, das eine horizontale Schwenkachse aufweist, mit dem Schwenkgetriebe verbunden ist.

Die Antriebswelle kann dabei eine zweiteilige Schiebewelle sein und ist vorzugsweise unterhalb der Deichsel angeordnet.

Die Antriebswelle kann gelenkig am Gabelstützgelenk befestigt sein, wobei der Gelenkpunkt des Gabelstützgelenkes mit dem Gelenkpunkt des Schwenkgetriebes fluchtet.

Vorteilhafterweise weist der der Antriebswelle zugewandte Teil des Gabelstützgelenks eine Lagerführung für die Antriebswelle auf, während der Drehpunkt der Deichsel am Querträger, in Fahrtrichtung gesehen, hinter dem Drehpunkt des Schwenkgetriebes liegt.

Besonders vorteilhaft ist es, wenn die Kraftübertragung zu den Mähwerkzeugen von Schwenkgetriebe aus über einen Riemenantrieb erfolgt, der das Schwenkgelenk mit einem der inneren Mähwerkzeuge verbindet, wobei zwei Riemenscheiben unterschiedlichen Durchmessers vorgesehen sind.

Mit der erfindungsgemäßen Mähmaschine wird der Vorteil erzielt, daß der Antrieb auf den pendelnd aufgehängten Querträger direkt von vorne mittels der Antriebswelle über das Gabelstützgelenk mit horizontaler Schwenkachse in das Schwenkgetriebe erfolgt. Dieses ist drehbar gelagert und wird von der Deichsel über die Antriebswelle mit verschwenkt. Damit kann jegliche Höhenbewegung zwischen Deichsel und Mähmaschine bei gezogenen Mähmaschine mit beidseitig ausschwenkbarem Querträger aufgenommen werden. Der Antrieb ist erheblich einfacher im Aufbau als herkömmliche Antriebe und kostengünstiger zu fertigen; gleichzeitig kann die Mähmaschine kompakter ausgeführt werden.

Im folgenden wird die Erfindung anhand der Zeichnung näher erläutert, in der ein vorteilhaftes Ausführungsbeispiel dargestellt ist. Es zeigen:

Figur 1    schematisch eine Draufsicht auf eine erfindungsgemäße Mähmaschine;

Figur 2    eine Seitenansicht dieser Mähmaschine und

Figur 3    eine vergrößerte Darstellung des Gabelstützgelenkes.

In den Figuren ist mit 1 der Anbaubock eines nicht näher dargestellten Schleppers bezeichnet, der eine nach beiden Seiten verschwenkbare Mähmaschine zieht, die über eine Deichsel 3 mit dem Schlepper verbunden ist. Mit 2 ist der Zapfwellenanschluß des Schleppers bezeichnet, von dem aus die Kraftübertragung mittels einer Antriebsgelenkwelle 5, 5a zur Mähmaschine erfolgt.

Die Mähmaschine selbst weist beim gewählten Ausführungsbeispiel vier Mähtrommeln 7, 8, 9, 10 auf, die unterhalb des Querträgers 6 angeordnet sind, wobei jede Mähtrommel an ihrem unteren Ende mit Schneidmessern versehen ist und sich um eine im wesentlich senkrechte Rotationsachse dreht.

Mit 25 ist der Fahrgestellrahmen der Mähmaschine bezeichnet, in dessen Mitte die Deichsel 3 um einen Drehpunkt 11 schwenkbar angelenkt ist. Mit 21 ist eine Aufbereitungsanordnung bezeichnet, die z.B. über einen Riemenantrieb 22 mit einem Winkelgetriebe 26 an einem Ende des Querträgers 6 verbunden ist und zur Aufbereitung des Mähgutes dient.

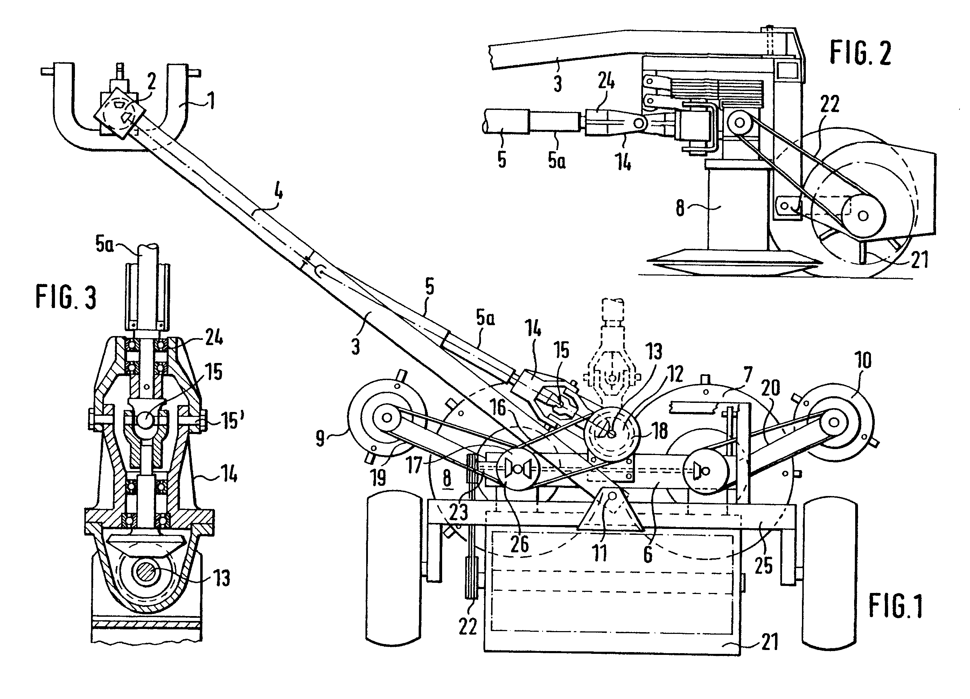

Etwa in der Mitte des Querträgers 6 ist ein Schwenkgetriebe 12 vorgesehen, das um einen Drehpunkt 13 verschwenkbar ist und das über ein Gabelstützgelenk 14 mit dem Endstück 5a der Antriebsgelenkwelle verbunden ist. Diese Antriebsgelenkwelle dient zur Abstützung des Drehmoments des Schwenk getriebes 12 und zwar über des Gabelstützgelenk 14, das zwischen dem Endstück 5a der als zweiteilige Schiebewelle ausgeführen Antriebsgelenkwelle und dem Schwenkgetriebe 12 angeordnet ist. Der Gelenkpunkt 15 des Gabelstützgelenks ist dabei fluchtend mit dem Gelenkpunkt des Schwenkgetriebes 12, das z.B. als Kreuzgelenk ausgeführt ist (Figur 3). Die den Gelenkpunkt durchsetzende, horizontale Gelenkachse 15' sorgt für eine einwandfreie Bodenanpassung der Mähmaschine.

Diese Figur zeigt auch, daß das vordere Teil 24 des Gabelstützgelenkes 14 als Lagerführung für das Endstück 5a der Antriebsgelenkwelle dient. Der feststehende Teil 5 der Antriebsgelenkwelle ist über ein herkömmliches Kreuzgelenk mit einer zweiten Gelenkwelle 4 verbunden, die mit der Zapfwelle 2 des Schleppers verbunden ist.

Der Drehpunkt 11 der Deichsel am Fahrgestellrahmen 25 weist einen Abstand vom Drehpunkt 13 des Schwenkgetriebs 12 auf, so daß er in Fahrtrichtung der Mähmaschine gesehen hinter diesem liegt. Beim Verschwenken der Deichsel 3 in die Transportstellung ist eine Längenänderung der Antriebsgelenkwelle 5, 5a erforderlich, der durch die Ausführung der Antriebsgelenkwelle als zweiteilige Schiebewelle 5, 5a entsprochen wird. Diese gilt auch beim seitlichen Verschwenken der Mähmaschine von einer in die andere Arbeitsstellung.

Der Antrieb des Mähwerks erfolgt vom Schwenkgetriebe 12 aus über einen Riementrieb 16, 17, 18 auf die Antriebswelle z.B. des inneren Kreisels 8. Die beiden Riemenscheiben 17, 18 weisen einen unterschiedlichen Durchmesser auf und sind gegenseitig austauschbar um die Mähmaschine einmal mit z.B. 540 U/min und zum anderen mit 1000 U/min betreiben zu können.

In Figur 1 ist die Mähmaschine in einer ihrer Arbeisstellungen mit ausgezogenen Linien dargestellt; die strichpunktierten Linien ausgehend vom Schwenkgetriebe 12 zeigen die Mähmaschine in der Transportstellung.

Wie das in den Figuren dargestellte Ausführungsbeispiel zeigt, sind vier Mähtrommeln vorgesehen, wobei die beiden mittleren Mähtrommeln 7, 8 den gleichen Durchmesser und damit einen gleichen Flugkreisdurchmesser ihrer Schneidmesser aufweisen. Die beiden zusätzlichen Mähtrommeln 9, 10 die ebenfalls über geeignete Riemenantriebe 19, 20 antreibbar sind, weisen einen kleineren Flugkreisdurchmesser ihrer Schneidwerkzeuge auf, wobei die dem Schlepper am nächsten liegende Mähtrommel 9 die gleiche Drehrichtung wie die danebenliegende größere Mähtrommel 8 aufweisen kann, während die beiden anderen Mähtrommeln 7, 10 dazu entgegengesetzte Drehrichtungen aufweisen. Zusätzlich sind bei diesem Ausführungsbeispiel die beiden äußeren Mähtrommeln kleineren Durchmessers 9, 10 in Arbeitsrichtung der Mähmaschine gesehen nach vorne versetzt, so daß ihre Achsen vor derjenigen Ebene liegen, welche die beiden Achsen der mittleren Mähtrommeln 7, 8 miteinander verbindet. Dadurch wird ein problemloses und leichtes Übergeben des Futters von den beiden zusätzlichen Mähtrommel 9, 10 an die beiden danebenliegenden Mähtrommeln 8, 7 bewirkt, zwischen denen der Schwad nach Aufbereitung durch die Aufbereitungsanordnung 21 abgelegt wird.

Mit der erfindungsgemäßen Mähmaschine können also die üblicherweise auftretenden Höhenbewegungen zwischen Deichsel und Mähmaschine bei pendelnder Aufhängung ohne weiteres aufgenommen werden, da die Deichsel lediglich am Fahrgestellrahmen angelenkt ist, daß Schwenkgetriebe hingegen, völlig getrennt vom Fahrgestellrahmen, über das Gabelkreuzgelenk mit horizontaler Schwenkachse am Querträger angelenkt ist.

## Ansprüche

1. Mähmaschine für den seitlich versetzten Anbau an einen Schlepper, die einen Fahrgestellrahmen (25) und einen Querträger (6) aufweist, der mehrere Mähwerkzeuge (7,8,9,10) mit im wesentlichen senkrechter Rotationsachse aufweist, deren Unterseite mit Schneidmessern versehen sind, wobei die Mähmaschine über eine verschwenkbare Deichsel (3) mit einem Schlepper verbindbar ist und der Antrieb der Mähwerkzeuge (7,8,9,10) über eine Antriebsgelenkwelle (5,5a) erfolgt, die mit der Zapfwelle des Schleppers verbindbar ist und mit einem Schwenkgetriebe (12) verbunden ist, dadurch gekennzeichnet, daß das Schwenkgetriebe (12) im wesentlichen mittig am Querträger (6) angeordnet ist und daß die Antriebsgelenkwelle (5, 5a) über ein Gabelstützgelenk (14), das eine horizontale Schwenkachse (15') aufweist, mit dem Schwenkgetriebe (12) verbunden ist.

2. Mähmaschine nach Anspruch 1, dadurch gekennzeichnet, daß die Antriebsgelenkwelle (5,5a) eine zweiteilige Schiebewelle ist, und unterhalb der Deichsel (3) angeordnet ist.

3. Mähmaschine nach Anspruch 1 und 2, dadurch gekennzeichnet, daß die Antriebsgelenkwelle (5,5a) gelenkig am Gabelstützgelenk befestigt ist und daß der Gelenkpunkt (15) des Gabelstützgelenkes mit dem Drehgelenkpunkt (13) des Schwenkgetriebes (12) fluchtet.

4. Mähmaschine nach einem der vorhergehenden Ansprüche, dadurch gekennzeichnet, daß der der Antriebsgelenkwelle (5,5a) zugewandte Teil des Gabelstützgelenkes eine Lagerführung (24) für die Antriebswelle aufweist.

5. Mähmaschine nach einem der vorhergehenden Ansprüche, dadurch gekennzeichnet, daß der Drehpunkt (11) der Deichsel am Fahrgestellrahmen (25) hinter dem Drehpunkt (13) des Schwenkgetriebes liegt.

6. Mähmaschine nach einem der vorhergehenden Ansprüche, dadurch gekennzeichnet, daß die Kraftübertragung zu den Mähwerkzeugen vom Schwenkgetriebe (12) aus über einen Riemenantrieb (16, 17, 18) erfolgt, der das Schwenkgetriebe(12) mit einem der inneren Mähwerkzeuge verbindet, wobei zwei Riemenscheiben (17, 18) unterschiedlicher Durchmesser vorgesehen sind.

## Claims

1. Mowing machine for the laterally offset attachment to a tractor, which machine includes a chassis frame (25) and a cross-beam (6), which includes a plurality of mowing tools (7, 8, 9, 10) having substantially vertical axles of rotation, the undersides of which tools are provided with cutting blades, the mowing machine being connectable to a tractor via the intermediary of a pivotable tow-bar (3), and the mowing tools (7, 8, 9, 10) are driven via the intermediary of a universallyjointed drive shaft (5, 5a), which is connectable to the power take-off shaft of the tractor and is connected to a turning gear (12), characterised in that the turning gear (12) is disposed substantially centrally on the cross-beam (6), and in that the universally-jointed drive shaft (5, 5a) is connected to the turning gear (12) via the intermediary of a bifurcated supporting pivot joint (14), which includes a horizontal pivotal axle (15').

2. Mowing machine according to claim 1, characterised in that the universally-jointed drive shaft (5, 5a) is a two-part spline shaft and is disposed beneath the tow-bar (3).

3. Mowing machine according to claims 1 and 2, characterised in that the universally-jointed drive shaft (5, 5a) is pivotally mounted on the bifurcated supporting pivot joint, and in that the pivot point (15) of the bifurcated supporting pivot joint is in alignment with the rotatable pivot point (13) of the turning gear (12).

4. Mowing machine according to one of the preceding claims, characterised in that the portion of the bifurcated supporting pivot joint facing the universally-jointed drive shaft (5, 5a) includes a guide bearing (24) for the drive shaft.

5. Mowing machine according to one of the preceding claims, characterised in that the pivot point (11) of the tow-bar lies on the chassis frame (25) behind the pivot point (13) of the turning gear.

6. Mowing machine according to one of the preceding claims, characterised in that the transmission of power to the mowing tools from the turning gear (12) is effected via the intermediary of a belt drive (16, 17, 18), which connects the turning gear (12) to one of the internal mowing tools, two belt pulleys (17, 18) of different diameters being provided.

médiaire d'un entraînement à courroie (16, 17, 18) qui relie l'engrenage pivotant (12) à l'un des outils de fauchage intérieur, deux poulies (17, 18) de diamètres différents étant prévues.

## Revendications

1. Faucheuse pour un montage latéral décalé à un tracteur, qui comprend un cadre de châssis (25) et une poutre porteuse transversale (6) comportant plusieurs outils de fauchage (7, 8, 9, 10) avec un axe de rotation sensiblement vertical et dont le côté inférieur est pourvus de couteaux de coupe, la faucheuse étant susceptible d'être reliée à un tracteur par l'intermédiaire d'une barre d'attelage pivotante (3) et l'entraînement des outils de fauchage (7, 8, 9, 10) s'effectuant à l'aide d'un arbre d'entraînement articulé (5, 5a) qui peut être relié a l'arbre de prise de force du tracteur et est relié à un engrenage pivotant (12), caractérisée en ce que l'engrenage pivotant (12) est disposé sensiblement au centre de la poutre transversale (6) et que l'arbre d'entraînement articulé (5, 5a) est relié à l'engrenage pivotant (12) par une chape de support (14) comprenant un axe de pivotement horizontal (15').

2. Faucheuse selon la revendication 1, caractérisée en ce que l'arbre d'entraînement articulé (5, 5a) est un arbre en deux parties et est disposé en dessous de la barre d'attelage (3).

3. Faucheuse selon les revendications 1 et 2, caractérisée en ce que l'arbre articulé d'entraînement (5, 5a) est articulé à la chape de support et que le point d'articulation (15) de la chape est en alignement avec le point d'articulation (13) de l'engrenage pivotant (12).

4. Faucheuse selon l'une des revendications précédentes, caractérisée en ce que la partie de la chape de support, qui est proche de l'arbre articulé d'entraînement (5, 5a) comporte un guidage de palier (24) pour l'arbre d'entraînement.

5. Faucheuse selon l'une des revendications précédentes, caractérisée en ce que le point de rotation (11) de la barre d'attelage est disposé au châssis (25) derrière le point de rotation (13) de l'engrenage pivotant.

6. Faucheuse selon l'une des revendications précédentes, caractérisée en ce que la transmission des forces aux outils de fauchage s'effectue depuis l'engrenage pivotant (12) par l'inter-

FIG. 2

FIG.1

FIG. 3